# EUROPEAN PATENT SPECIFICATION

(11) **EP 3 702 891 B1**
(45) Date of publication and mention of the grant of the patent: **17.01.2024**
(21) Application number: 19159868.9
(22) Date of filing: 28.02.2019
(51) Int. Cl.: G06F 3/0362, G06F 3/038

(54) **A USER INTERFACE PANEL**
BENUTZERSCHNITTSTELLENTAFEL
PANNEAU D'INTERFACE UTILISATEUR

(43) Date of publication of application: 02.09.2020
(73) Proprietor: Rohde & Schwarz GmbH & Co. KG, 81671 München (DE)
(72) Inventor: FRIEDL, Richard, 85540 Haar (DE); WILLE, Raimund, 85560 Ebersberg (DE); GANSLMEIER, Bernhard, 83024 Rosenheim (DE)
(74) Representative: Isarpatent

(56) References cited:
- EP-A2- 0 346 859
- WO-A2-2007/023414
- US-A1- 2006 022 521
- US-A1- 2012 268 448
- US-A1- 2018 260 083

## Description

The invention relates to a user interface panel for an electrical device, in particular a portable electrical device such as a radio device.

US 2006/0022521 A1 relates to a multifunction control system for a vehicle plurality of selectively variable characteristic including an input member and a generally cylindrical wheel.

EP 0 346 859 A2 relates to a squeezable computer control device. This device is a mouse-type control device for use with computer display to generate computer display control signal.

WO 2007/023414 A2 relates to an automatic adaptative control method, system and device.

Most electrical devices comprise a user interface panel which allows a user or operator to adjust parameters of the electrical device and/or to connect other devices to the respective device. A user interface panel comprises input elements to input parameters and/or to adjust functional parameters such as the volume of a loudspeaker. Further, a user interface panel can comprise a display to give a user a feedback of adjusted parameters of the respective electrical device. A user interface panel can further comprise device interfaces to connect auxiliary devices to the respective electrical device. The auxiliary devices can comprise for instance additional loudspeakers or a headset to the electrical device. Small portable electrical devices have only a limited space to implement a user interface panel, which is an obstacle if the electrical device offers a wide range of functions with a wide variety of adjustable parameters. Consequently, in most cases the available space for providing input and/or output components of a user interface panel is limited.

Accordingly, it is an object of the present invention to provide a user interface panel for an electrical device which uses the available space efficiently and which occupies a minimum space on the housing of the electrical device.

This object is achieved according to a first aspect of the present invention by a user interface panel comprising the features of claim 1. Dependent claims define alternative advantageous embodiments.

In the following, aspects related to the invention are described in more detail with reference to the enclosed figures.
- Fig. 1: shows a schematic diagram for illustrating a possible exemplary embodiment of a user interface panel according to the first aspect of the present invention;
- Fig. 2: shows a further block diagram for illustrating a possible exemplary embodiment of a user interface panel according to the first aspect of the present invention;
- Fig. 3: shows a front view on a possible exemplary embodiment of a user interface panel according to the present invention integrated in a radio device;
- Figs. 4, 5, 6: illustrate schematically possible exemplary embodiments of a manual input element used in a user interface panel according to the present invention.

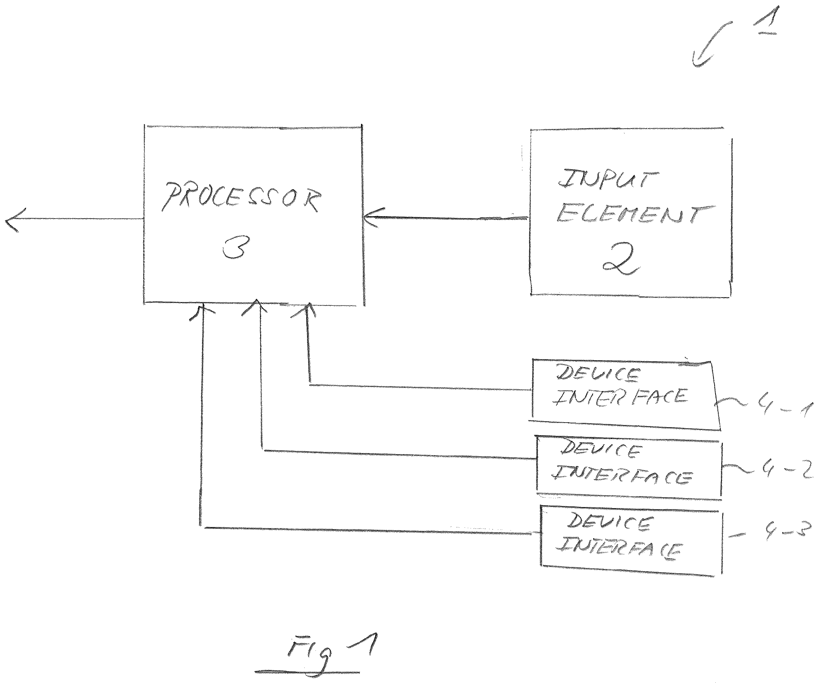

As can be seen in the block diagram of Fig. 1, a user interface panel 1 of an electrical device ED comprises a manual input element 2 connected to a processor 3. The processor 3 can comprise a setting interpretation logic The processor or logic 3 of the electrical device is configured to interpret the input settings received from the manual input element 2 depending on a connection status of at least one device interface to assign internal functional settings of the respective electrical device. In the illustrated example of Fig. 1, the electrical device ED comprises three device interfaces 4-1, 4-2, 4-3. The device interfaces 4-i are connected to the processor 3 as illustrated in the block diagram of Fig. 1.

The number and types of the device interfaces 4-i can vary depending on the type and configuration of the respective electrical device ED. The device interfaces 4-i can comprise wired device interfaces and/or wireless device interfaces. The wired device interfaces can comprise for instance network interfaces, service port interfaces, loudspeaker interfaces, headset interfaces, antenna interfaces, push-to-talk interfaces, crypto device interfaces and/or calibration device interfaces. A network interface can be a LAN interface used to connect the electrical device ED to a local area network LAN. A service port interface can be used to connect a service laptop to the electrical device ED to perform service operations. A loudspeaker device interface can be used to connect a loudspeaker to the electrical device ED. A headset interface can be provided to connect a headset of an operator to the electrical device ED. An antenna interface can be used to connect a receiving or transmission antenna to the respective electrical device ED. Other use case-specific device interfaces 4 can be provided as well as in the respective user interface panel 1 such as a push-to-talk interface. Further, the device interfaces 4-i can also comprise a crypto device interface or a calibration device interface. The calibration device interface can be used to connect a calibration component to the electrical device ED used for calibration of functional components integrated in the electrical device ED.

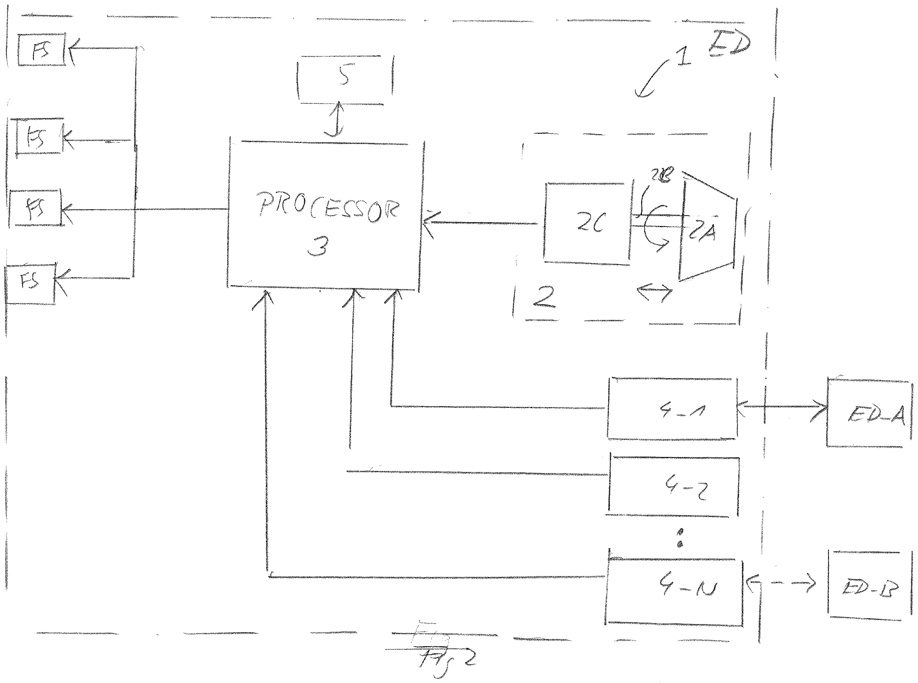

The manual input element 2 can be used by an operator or user to input settings which are interpreted by the processor 3 of the electrical device ED depending on a connection status of the device interfaces 4-i to assign functional settings within the electrical device ED. The manual input element 2 as illustrated in the block diagram of Fig. 1 can comprise in a possible embodiment a multifunctional electromechanical component adapted to input multiple settings in response to different manual input operations applied by the user. In the current invention, the manual input element 2 comprises a knob 2A fixed to a rotary shaft 2B as also illustrated in the embodiments of Fig. 2.

The connection status of each device interface 4-i is detectable in a possible implementation by an associated connection status detector indicating a detected current connection status of the respective device interface 4-i to the processor 3. The connection status of a device interface 4-i can comprise different kinds of connection status. In a possible embodiment, the detected connection status of a device interface 4-i can comprise a positive connection status where the connection of the electrical device ED with another matching device via the respective device interface 4-i is detected by the associated connection status detector. The connection status of a device interface 4-i can further comprise in a possible embodiment a negative connection status where no connection of the electrical device ED with any other device via the respective device interface 4-i is detected by the associated connection status detector of the device interface 4-i. In a further possible embodiment, the connection status can also comprise an erroneous connection status where a connection of the electrical device ED with another not matching device via the respective device interface 4-i is detected by the connection status detector of said device interface.

The device interfaces 4-i can form part of the user interface panel 1 and/or can be integrated in the housing of the electrical device ED. The user interface panel 1 can comprise further components, in particular a keypad, a display unit, one or more light-emitting diodes or a power switch which can be used to switch on or off the respective electrical device ED. The display of the user interface panel 1 can indicate in a possible embodiment parameters of the electrical device ED adjusted by means of the at least one manual input element 2. The display of the user interface panel 1 can further be used to display a detected current connection status of one or more device interfaces 4-i.

Fig. 2 shows a schematic diagram of a possible exemplary embodiment of a user interface panel 1 integrated in a housing of an electrical device ED. As can be seen in the block diagram of Fig. 2, the electrical device ED comprises in the illustrated embodiment N device interfaces 4-1 to 4-N which can be used to connect external devices to the electrical device ED. The number and type of the device interfaces 4-i can vary depending on the functionalities offered by the electrical device ED. The device interfaces 4-i can comprise wired interfaces and/or wireless interfaces. In the illustrated example of Fig. 2, a first device interface 4-1 is a wired interface connected via an electrical wire to an external device ED-A. Further, the last device interface 4-N in the illustrated example is a wireless device interface connected via a wireless link to an external electrical device ED-B.

The electrical device ED can for instance comprise a radio device having a plurality of internal electronic components. The electrical device can comprise internal components having functional settings FS as controlled by the processor 3 as illustrated schematically in Fig. 2. The functional settings FS can be for instance settings of electronic parameters of electronic components.

In the current invention, as illustrated in the embodiment of Fig. 2, the manual input element 2 comprises a multifunctional electromechanical input component having a knob 2A fixed to a rotary shaft 2B and an integrated in an electronic unit 2C reading the manual input settings provided by the knob 2A and the rotary shaft 2B. The knob 2A of the multifunctional electromechanical input component 2 is adapted to be turned manually by a user to rotate the rotary shaft 2B around its longitudinal axis to perform rotary input settings notified by the electronic unit 2C to the processor 3 wherein the received input settings are interpreted by the processor 3 depending on the connection status of the device interfaces 4-i of the electrical device ED to assign associated functional settings FS of the respective electrical device ED. In the illustrated embodiment of Fig. 2, the knob 2A of the multifunctional electromechanical input component 2 can also be pushed or pulled manually by the user to shift the rotary shaft 2B along its longitudinal axis into at least two different positions thus performing translatory input settings interpreted by the processor 3 depending on the connection status of the device interfaces 4-i to assign associated functional settings FS of the electrical device ED.

In a further possible exemplary embodiment, the knob 2A of the multifunctional electromechanical input component 2 can be made of an elastic material and can be adapted to be squeezed or released manually by a pair of fingers of the user thus performing squeeze input settings interpreted by said processor 3 depending on the current connection status of the device interfaces 4-i of said electrical device ED to assign associated functional settings of the electrical device ED.

The multifunctional electromechanical input component 2 provides different degrees of freedom to provide input settings. For example, a user may either rotate the knob 2A to perform rotary input settings and/or push the knob 2A to provide translatory input settings. In a possible embodiment, the user can push or pull the knob 2A to provide at least two different translatory positions of the knob 2A which can be associated to different operation modes of the electrical device ED. In a possible embodiment, the rotary input settings can be interpreted by the processor 3 depending on the detected connection status of the device interfaces 4-i and depending on a current translatory input setting and/or depending on a current squeeze input setting.

In the current invention, the processor 3 has access to a configuration memory 5. In the current invention, functional mappings between internal functional settings FS of the electrical device ED and rotary, translatory and/or squeeze input settings depending on a detected connection status of the device interfaces 4-i of the electrical device ED can be stored in the configurable functional setting memory 5 of the electrical device ED illustrated in the block diagram of Fig. 2.

In a further possible embodiment, the processor 3 is configured to interpret a combination of different connection status of a predetermined group of device interfaces 4-i.

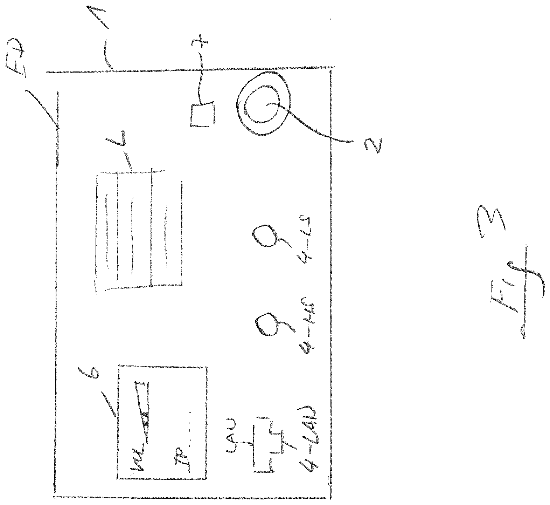

Fig. 3 shows a front view on a possible exemplary embodiment of a user interface panel 1 of an electrical device ED such as a radio unit. In the illustrated embodiment, the user interface panel 1 comprises a manual input element 2 such as a multifunctional electromechanical input component having a knob 2A fixed to a rotary shaft 2B. The user interface panel 1 may comprise more than one multifunctional electromechanical components in possible embodiments. The multifunctional electromechanical component 2 illustrated in Fig. 3 is adapted to input multiple settings in response to manual input operations applied by the user. The manual input operations of the user can comprise turning the knob 2A of the multifunctional electromechanical component 2 and/or pushing the knob 2A of the electromechanical component 2 or pulling the knob 2A of the electromechanical component 2. Further, in this embodiment, the multifunctional electromechanical component 2 may allow further manual input operations applied by the user, for instance squeezing a pressure-sensitive chamber integrated in the periphery of the knob 2A of the multifunctional electromechanical component 2. In a possible embodiment, the multifunctional electromechanical component 2 provides rotary, translatory and/or squeeze input settings performed in response to manual input operations applied by the user. In the illustrated exemplary embodiment of Fig. 3, the user interface panel 1 comprises an integrated loudspeaker L. The user interface panel 1 may comprise in the illustrated example a network device interface 4-LAN to connect the electrical device ED to a local area network LAN. Further, the user interface panel 1 of the electrical device ED comprises in the illustrated embodiment a headset device interface 4-HS to connect a headset HS of an operator to the electrical device ED. Further, the user interface panel 1 comprises in the illustrated embodiment a loudspeaker jack 4-LS to connect an additional loudspeaker to the electrical device ED. The device interface 4-LAN can also be used to connect a service laptop to the electrical device ED in a possible embodiment. The user interface panel 1 comprises further output components, in particular a display 6 providing a feedback to the user. The display 6 can for instance indicate an adjustable parameter such as a volume of a headset or a loudspeaker as illustrated schematically in Fig. 3. Further, the display 6 may indicate an IP address which may be adjusted by the user, for instance by operating the manual input element 2.

The integrated processor 3 of the user interface panel 1 is adapted to interpret the input settings performed by the user depending on a detected current connection status of the different device interfaces 4-i. For instance, if a loudspeaker has been plugged into the loudspeaker jack 4-LS, the turning of the rotatable manual input element 2 can be automatically interpreted as changing the volume of the connected loudspeaker. In contrast, if the processor 3 is informed that a headset has been connected to the headset jack 4-HS turning the knob 2A of the multifunctional electromechanical input component 2, this may be interpreted as changing the volume of the headset. The connection of a service port to the network device interface 4-LAN can also have an impact on the interpretation of the input settings performed by the manual input element 2. The user interface panel 1 can comprise further components such as a power switch 7 which can be used to switch on or off the electrical device ED. Further, the user interface panel 1 can comprise several LEDs indicating different functions of the electrical device. Further, the user interface panel 1 can also comprise a keypad performing additional input settings.

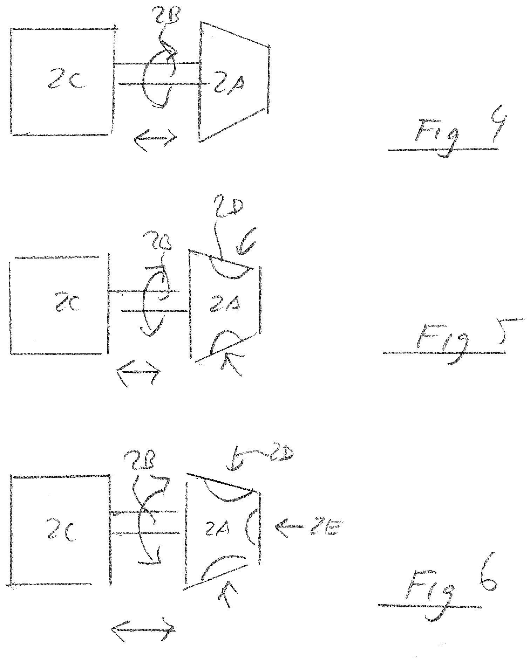

Figs. 4, 5, 6 show schematically possible exemplary embodiments of a multifunctional electromechanical input element 2 which can be integrated in a user interface panel 1 according to the present invention. In the illustrated implementation of Fig. 4, the multifunctional electromechanical component comprises a knob 2A, a rotary shaft 2B and a local electronic circuit 2C adapted to read the position of the rotary shaft 2B. In the illustrated embodiment of Fig. 4, the multifunctional electromechanical component 2 offers two degrees of freedom. A user can either rotate the rotary shaft 2B around its longitudinal axis to perform rotary input settings or may push or pull the rotary shaft 2B between at least two positions to perform translatory input settings. The rotary input settings as well as the translatory input settings are interpreted by the processor 3 depending on the connection status of the device interfaces 4-i to assign associated functional settings of the electrical device ED.

In the illustrated embodiment of Fig. 5, the multifunctional electromechanical input component 2 comprises a knob 2A which can include pressure-sensitive chambers on a circumferential surface of the knob 2A as illustrated in Fig. 5. In a possible embodiment, the knob 2A can be made of an elastic material which can have a surrounding pressure-sensitive chamber 2D which can be squeezed or released manually by the user to perform squeeze input settings. The pressure-sensitive chamber 2D can be connected physically via a tube to a pressure sensor in the protection electronic circuit 2C of the multifunctional electromechanical input component 2. The squeeze input settings can be interpreted by the processor 3 also depending on the connection status of the device interfaces 4-i of the electrical device ED to assign associated functional settings of the electrical device ED. In the illustrated embodiment of Fig. 5, the multifunctional electromechanical input component 2 offers three different ways to perform input settings including rotary, translatory and squeeze input settings.

Fig. 6 shows a further exemplary embodiment of a multifunctional electromechanical input component which can be used in a user interface panel 1 according to the present invention. In the illustrated embodiment of Fig. 6, the knob 2A further comprises on its front side a further pressure-sensitive chamber to receive a squeeze input setting. The user can press with a finger on the front side of the knob 2A to exert a mechanical force on the front pressure-sensitive chamber 2E measured by a pressure-sensitive element within the electronic protection circuit 2C and notified to the processor 3. If the pressurizing force of the finger receives a predetermined pressure force threshold, a translatory movement of the rotary shaft 2B can be initiated and interpreted as a translatory input setting. In contrast, for a comparatively low mechanical force applied to the front side of the knob 2A, a front squeeze input setting can be applied by the user. In the illustrated exemplary embodiment of Fig. 6, the multifunctional electromechanical input component offers four possible input settings, i.e. a translatory input setting by shifting the rotary shaft 2B along its longitudinal axis, a rotary input setting by turning the rotary shaft 2B around its longitudinal axis, a first squeeze input setting by pressing against the circumferential surface of the knob 2A and a second squeeze setting by pressing slightly against the front side of the knob 2A.

Accordingly, the provision of a multifunctional electromechanical input component 2 as illustrated in the embodiments of Figs. 4, 5, 6 provides a high degree of freedom for performing different input settings so that other input components of the user interface panel 1 can become redundant. The multifunctional manual input elements 2 as illustrated in the implementations of Figs. 4 to 6 can be used to replace other input components of the user interface panel 1 thus saving space when integrating the user interface panel 1 in a portable electrical device ED. For instance, by providing a multifunctional electromechanical input component 2, the provision of a keypad can be avoided thus reducing the size of the user interface panel 1. The provision of the user interface panel 1 according to the present invention further reduces the production costs of the electrical device ED and minimizes the effort required for maintenance or repair of the electrical device ED. With the user interface panel 1, it is possible to reduce the size of the electrical device ED. Further, the panel reduces the weight of the electrical device ED so that the electrical device ED can be carried by a user more easily.

## Claims

1. A user interface panel (1) of an electrical device (ED) having at least one device connection interface (4) adapted to connect another device to said electrical device (ED), said user interface panel (1) comprising at least one manual input element (2) adapted to input settings by a user interpreted by a processor (3) of said electrical device (ED) depending on a connection status of the at least one device connection interface (4) to assign functional settings of said electrical device (ED) ;
wherein the manual input element (2) comprises a multifunctional electromechanical component adapted to input multiple settings in response to manual input operations applied by the user, and the multifunctional electromechanical input component (2) comprises a knob (2A) fixed to a rotary shaft (2B);
wherein the connection status of each device connection interface (4) is detectable by an associated connection status detector indicating the detected connection status to the processor (3); and
wherein functional mappings between internal functional settings of the electrical device (ED) and settings of the knob depending on the connection status of each device connection interface (4) of said electrical device (ED) are stored in a configurable functional setting memory (5) of said electrical device (ED) and accessible to the processor (3).

2. The user interface panel according to claim 1, wherein the knob (2A) of the multifunctional electromechanical input component (2) is adapted to be turned manually by the user to rotate the rotary shaft (2B) around its longitudinal axis performing rotary input settings interpreted by said processor (3) depending on the connection status of the at least one device connection interface (4) of said electrical device (ED) to assign associated functional settings of said electrical device (ED).

3. The user interface panel according to claim 1 or 2, wherein the knob (2A) of the multifunctional electromechanical input component (2) is pushed or pulled manually by the user to shift the rotary shaft (2B) along its longitudinal axis into at least two positions performing translatory input settings interpreted by said processor (3) depending on the connection status of the at least one device connection interface (4) to assign associated functional settings of said electrical device (ED).

4. The user interface panel according to any of the preceding claims, wherein the knob (2A) of the multifunctional electromechanical input component (2) is made of an elastic material and is adapted to be squeezed or released manually by the user performing squeeze input settings interpreted by said processor (3) depending on the connection status of the at least one device connection interface (4) of said electrical device (ED) to assign associated functional settings of said electrical device (ED).

5. The user interface panel according to claims 2 to 4, wherein the rotary, translatory and/or squeeze settings are interpreted by said processor (3) depending on a detected current connection status of one or more device connection interfaces (4) of said electrical device (ED) to assign associated internal functional settings of said electrical device (ED).

6. The user interface panel according to claim 5, wherein the rotary input settings are interpreted by said processor (3) depending on the detected connection status of the at least one device connection interface (4) and depending on a current translatory input setting and/or depending on a current squeeze input setting.

7. The user interface panel according to any of the preceding claims 1 to 6, wherein the device connection interface (4) of said electrical device (ED) comprises a wired device connection interface and/or a wireless device connection interface.

8. The user interface panel according to claim 7, wherein the wired device connection interfaces (4) of said electrical device (ED) comprise
a network interface,
a service port interface,
a loudspeaker interface,
a headset interface,
an antenna interface,
a push-to-talk, PTT, interface,
a crypto device interface and
a calibration device interface.

9. The user interface panel according to any of the preceding claims 1 to 8, wherein the connection status of a device connection interface (4) of said electrical device (ED) comprises
a positive connection status where the connection of the electrical device (ED) with another matching device via said device connection interface (4) is detected by the respective connection status detector,
a negative connection status where no connection of the electrical device (ED) with any other device via said device connection interface (4) is detected by the respective connection status detector and
an erroneous connection status where a connection of the electrical device (ED) with another not matching device via said device connection interface (4) is detected by the respective connection status detector.

10. The user interface panel according to any of the preceding claims 1 to 9, further comprising
a keypad,
a display,
LEDs and
a power switch.

11. A radio device comprising a user interface panel (1) according to any of the preceding claims 1 to 10.

## Patentansprüche

1. Benutzerschnittstellenbedienungsfeld (1) einer elektrischen Vorrichtung (ED), die mindestens eine Vorrichtungsverbindungsschnittstelle (4) aufweist, die angepasst ist, um eine andere Vorrichtung mit der elektrischen Vorrichtung (ED) zu verbinden, das Benutzerschnittstellenbedienungsfeld (1) umfassend mindestens ein manuelles Eingabeelement (2), das an Eingabeeinstellungen durch einen Benutzer angepasst ist, die durch einen Prozessor (3) der elektrischen Vorrichtung (ED) abhängig von einem Verbindungsstatus der mindestens einen Vorrichtungsverbindungsschnittstelle (4) interpretiert werden, um Funktionseinstellungen der elektrischen Vorrichtung (ED)zuzuweisen,
wobei das manuelle Eingabeelement (2) eine multifunktionale elektromechanische Komponente umfasst, die angepasst ist, um vielfache Einstellungen als Reaktion auf manuelle Eingabevorgänge, die durch den Benutzer angewendet werden, einzugeben, und wobei die multifunktionale elektromechanische Eingabekomponente (2) einen Knopf (2A) umfasst, der an einer Drehwelle (2B) befestigt ist;
wobei der Verbindungsstatus jeder Vorrichtungsverbindungsschnittstelle (4) durch einen zugehörigen Verbindungsstatusdetektor erfassbar ist, der den erfassten Verbindungsstatus dem Prozessor (3) angibt; und
wobei funktionale Mappings zwischen internen funktionalen Einstellungen der elektrischen Vorrichtung (ED) und Einstellungen des Knopfs abhängig von dem Verbindungsstatus jeder Vorrichtungsverbindungsschnittstelle (4) der elektrischen Vorrichtung (ED) in einem konfigurierbaren funktionalen Einstellungsspeicher (5) der elektrischen Vorrichtung (ED) gespeichert und für den Prozessor (3) zugänglich sind.

2. Benutzerschnittstellenbedienungsfeld nach Anspruch 1, wobei der Knopf (2A) der multifunktionalen elektromechanischen Eingabekomponente (2) angepasst ist, um durch den Benutzer manuell gedreht zu werden, um die Drehwelle (2B) um ihre Längsachse herum zu drehen, die Dreheingabeeinstellungen durchführt, die durch den Prozessor (3) abhängig von dem Verbindungsstatus der mindestens einen Vorrichtungsverbindungsschnittstelle (4) der elektrischen Vorrichtung (ED) interpretiert werden, um zugeordnete funktionale Einstellungen der elektrischen Vorrichtung (ED) zuzuweisen.

3. Benutzerschnittstellenbedienungsfeld nach Anspruch 1 oder 2, wobei der Knopf (2A) der multifunktionalen elektromechanischen Eingabekomponente (2) durch den Benutzer manuell gedrückt oder gezogen wird, um die Drehwelle (2B) entlang ihrer Längsachse in mindestens zwei Positionen zu verschieben, wobei translatorische Eingabeeinstellungen durchgeführt werden, die durch den Prozessor (3) abhängig von dem Verbindungsstatus der mindestens einen Vorrichtungsverbindungsschnittstelle (4) interpretiert werden, um zugeordnete funktionale Einstellungen der elektrischen Vorrichtung (ED) zuzuweisen.

4. Benutzerschnittstellenbedienungsfeld nach einem der vorstehenden Ansprüche, wobei der Knopf (2A) der multifunktionalen elektromechanischen Eingabekomponente (2) aus einem elastischen Material hergestellt ist und angepasst ist, um durch den Benutzer manuell gedrückt oder gelöst zu werden, wobei das Durchführen der Drückeingabeeinstellungen durch den Prozessor (3) abhängig von dem Verbindungsstatus der mindestens einen Vorrichtungsverbindungsschnittstelle (4) der elektrischen Vorrichtung (ED) interpretiert werden, um zugeordnete funktionale Einstellungen der elektrischen Vorrichtung (ED) zuzuweisen.

5. Benutzerschnittstellenbedienungsfeld nach den Ansprüchen 2 bis 4, wobei die Dreh-, translatorischen- und/oder Drückeinstellungen durch den Prozessor (3) abhängig von einem erfassten aktuellen Verbindungsstatus einer oder mehrerer Vorrichtungsschnittstellen (4) der elektrischen Vorrichtung (ED) interpretiert werden, um zugeordnete funktionale Einstellungen der elektrischen Vorrichtung (ED) zuzuweisen.

6. Benutzerschnittstellenbedienungsfeld nach Anspruch 5, wobei die Dreheingabeeinstellungen durch den Prozessor (3) abhängig von dem erfassten Verbindungsstatus der mindestens einen Vorrichtungsverbindungsschnittstelle (4) und abhängig von einer aktuellen translatorischen Eingabeeinstellung und/oder abhängig von einer aktuellen Drückeingabeeinstellung interpretiert werden.

7. Benutzerschnittstellenbedienungsfeld nach einem der vorstehenden Ansprüche 1 bis 6, wobei die Vorrichtungsverbindungsschnittstelle (4) der elektrischen Vorrichtung (ED) eine drahtgebundene Vorrichtungsverbindungsschnittstelle und/oder eine drahtlose Vorrichtungsverbindungsschnittstelle umfasst.

8. Benutzerschnittstellenbedienungsfeld nach Anspruch 7, wobei die drahtgebundenen Vorrichtungsverbindungsschnittstellen (4) der elektrischen Vorrichtung (ED) umfassen:
eine Netzwerkschnittstelle,
eine Dienstanschlussschnittstelle,
eine Lautsprecherschnittstelle,
eine Headset-Schnittstelle,
eine Antennenschnittstelle,
eine Push-to-talk-Schnittstelle, PTT-Schnittstelle,
eine Kryptovorrichtungsschnittstelle und
eine Kalibrierungsvorrichtungsschnittstelle.

9. Benutzerschnittstellenbedienungsfeld nach einem der vorstehenden Ansprüche 1 bis 8, wobei der Verbindungsstatus einer Vorrichtungsverbindungsschnittstelle (4) der elektrischen Vorrichtung (ED) umfasst:
einen positiven Verbindungsstatus, wobei die Verbindung der elektrischen Vorrichtung (ED) mit einer anderen übereinstimmenden Vorrichtung über die Vorrichtungsverbindungsschnittstelle (4) durch den jeweiligen Verbindungsstatusdetektor erfasst wird,
einen negativen Verbindungsstatus, in dem keine Verbindung der elektrischen Vorrichtung (ED) mit einer beliebigen anderen Vorrichtung über die Vorrichtungsverbindungsschnittstelle (4) durch den jeweiligen Verbindungsstatusdetektor erkannt wird, und
einen fehlerhaften Verbindungsstatus, in dem eine Verbindung der elektrischen Vorrichtung (ED) mit einer anderen nicht übereinstimmenden Vorrichtung über die Vorrichtungsverbindungsschnittstelle (4) durch den jeweiligen Verbindungsstatusdetektor erfasst wird.

10. Benutzerschnittstellenbedienungsfeld nach einem der vorstehenden Ansprüche 1 bis 9, ferner umfassend
ein Tastenfeld,
eine Anzeige,
LEDs und
einen Leistungsschalter.

11. Funkvorrichtung, umfassend ein Benutzerschnittstellenbedienungsfeld (1) nach einem der vorstehenden Ansprüche 1 bis 10.

## Revendications

1. Panneau d'interface utilisateur (1) d'un dispositif électrique (ED) ayant au moins une interface de connexion de dispositif (4) adaptée pour connecter un autre dispositif audit dispositif électrique (ED), ledit panneau d'interface utilisateur (1) comprenant au moins un élément d'entrée manuel (2) adapté pour entrer des réglages par un utilisateur interprété par un processeur (3) dudit dispositif électrique (ED) en fonction d'un état de connexion de l'au moins une interface de connexion de dispositif (4) afin d'attribuer des réglages fonctionnels dudit dispositif électrique (ED) ;
dans lequel l'élément d'entrée manuel (2) comprend un composant électromécanique multifonctionnel adapté pour entrer de multiples réglages en réponse à des opérations d'entrée manuelles appliquées par l'utilisateur, et le composant d'entrée électromécanique multifonctionnel (2) comprend un bouton (2A) fixé à un arbre rotatif (2B) ;
dans lequel l'état de connexion de chaque interface de connexion de dispositif (4) est détectable par un détecteur d'état de connexion associé indiquant l'état de connexion détecté au processeur (3) ; et
dans lequel des mappages fonctionnels entre des réglages fonctionnels internes du dispositif électrique (ED) et des réglages du bouton en fonction du statut de connexion de chaque interface de connexion de dispositif (4) dudit dispositif électrique (ED) sont stockés dans une mémoire de réglage fonctionnelle configurable (5) dudit dispositif électrique (ED) et accessibles au processeur (3).

2. Panneau d'interface utilisateur selon la revendication 1, dans lequel le bouton (2A) du composant d'entrée électromécanique multifonctionnel (2) est adapté pour être tourné manuellement par l'utilisateur afin de faire tourner l'arbre rotatif (2B) autour de son axe longitudinal effectuant des réglages d'entrée rotatifs interprétés par ledit processeur (3) en fonction du statut de connexion de l'au moins une interface de connexion de dispositif (4) dudit dispositif électrique (ED) pour attribuer des réglages fonctionnels associés dudit dispositif électrique (ED).

3. Panneau d'interface utilisateur selon la revendication 1 ou 2, dans lequel le bouton (2A) du composant d'entrée électromécanique multifonctionnel (2) est poussé ou tiré manuellement par l'utilisateur pour déplacer l'arbre rotatif (2B) le long de son axe longitudinal en au moins deux positions effectuant des réglages d'entrée translatif interprétés par ledit processeur (3) en fonction du statut de connexion de l'au moins une interface de connexion de dispositif (4) pour attribuer des réglages fonctionnels associés dudit dispositif électrique (ED).

4. Panneau d'interface utilisateur selon l'une quelconque des revendications précédentes, dans lequel le bouton (2A) du composant d'entrée électromécanique multifonctionnel (2) est constitué d'un matériau élastique et est adapté pour être pressé ou libéré manuellement par l'utilisateur effectuant des réglages d'entrée de compression interprétés par ledit processeur (3) en fonction du statut de connexion de l'au moins une interface de connexion de dispositif (4) dudit dispositif électrique (ED) pour attribuer des réglages fonctionnels associés dudit dispositif électrique (ED).

5. Panneau d'interface utilisateur selon les revendications 2 à 4, dans lequel les réglages rotatifs, translatif et/ou de compression sont interprétés par ledit processeur (3) en fonction d'un état de connexion actuel détecté d'une ou de plusieurs interfaces de dispositif (4) dudit dispositif électrique (ED) pour attribuer des réglages fonctionnels internes associés dudit dispositif électrique (ED).

6. Panneau d'interface utilisateur selon la revendication 5, dans lequel les réglages d'entrée rotatifs sont interprétés par ledit processeur (3) en fonction du statut de connexion détecté de l'au moins une interface de connexion de dispositif (4) et en fonction d'un réglage d'entrée de translation actuel et/ou en fonction d'un réglage d'entrée de fluide actuel.

7. Panneau d'interface utilisateur selon l'une quelconque des revendications 1 à 6 précédentes, dans lequel l'interface de connexion de dispositif (4) dudit dispositif électrique (ED) comprend une interface de connexion de dispositif câblé et/ou une interface de connexion de dispositif sans fil.

8. Panneau d'interface utilisateur selon la revendication 7, dans lequel les interfaces de connexion de dispositif filaire (4) dudit dispositif électrique (ED) comprennent
une interface réseau,
une interface de port de service,
une interface de haut-parleur,
une interface de casque,
une interface d'antenne,
une interface push-to-talk, PTT,
une interface de crypto-dispositif et
une interface de dispositif d'étalonnage.

9. Panneau d'interface utilisateur selon l'une quelconque des revendications précédentes 1 à 8, dans lequel l'état de connexion d'une interface de connexion de dispositif (4) dudit dispositif électrique (ED) comprend
un état de connexion positive où la connexion du dispositif électrique (ED) avec un autre dispositif d'adaptation par l'intermédiaire de ladite interface de connexion de dispositif (4) est détectée par le détecteur d'état de connexion respectif,
un état de connexion négatif où aucune connexion du dispositif électrique (ED) avec un autre dispositif par l'intermédiaire de ladite interface de connexion de dispositif (4) n'est détectée par le détecteur d'état de connexion respectif et
un état de connexion erroné où une connexion du dispositif électrique (ED) avec un autre dispositif non correspondent par l'intermédiaire de ladite interface de connexion de dispositif (4) est détectée par le détecteur d'état de connexion respectif.

10. Panneau d'interface d'utilisateur selon l'une quelconque des revendications 1 à 9 précédentes, comprenant en outre
un clavier,
un dispositif d'affichage,
des DEL et
un commutateur de puissance.

11. Dispositif radio comprenant un panneau d'interface utilisateur (1) selon l'une quelconque des revendications précédentes 1 à 10.
